(19) Europäisches Patentamt
European Patent Office
Office européen des brevets

(11) Veröffentlichungsnummer: **0 457 138 A2**

(12) **EUROPÄISCHE PATENTANMELDUNG**

(21) Anmeldenummer: **91107245.2**

(51) Int. Cl.$^5$: **C08L 67/00**, C08L 71/12

(22) Anmeldetag: **04.05.91**

(30) Priorität: **15.05.90 DE 4015533**

(43) Veröffentlichungstag der Anmeldung:
**21.11.91 Patentblatt 91/47**

(84) Benannte Vertragsstaaten:
**BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Arnold-Mauer, Baerbel, Dr.**
**Im Moosenborn 33**
**W-6701 Kallstadt(DE)**
Erfinder: **Bronstert, Klaus, Dr.**
**Gartenstrasse 26**
**W-6719 Carlsberg(DE)**
Erfinder: **Baumgartner, Ehrenfried, Dr.**
**Goethestrasse 1**
**W-6701 Roedersheim-Gronau(DE)**

(54) **Thermoplastische Formmassen auf der Basis von Polyestern und Polyphenylenethern.**

(57) Thermoplastische Formmassen, enthaltend
A) 5 bis 94,9 Gew.-% eines Polyesters,
B) 5 bis 94,9 Gew.-% eines Polyphenylenethers,
C) 0,1 bis 50 Gew.-% eines durch anionische Polymerisation erhältlichen Homo- oder Copolymerisates aus Vinylaromaten oder Dienen oder deren Mischungen, welche primäre oder sekundäre Aminogruppen an den Kettenenden tragen,
D) 0 bis 40 Gew.-% eines schlagzähmodifizierenden Kautschuks,
E) 0 bis 60 Gew.-% üblicher Zusatzstoffe und Verarbeitungshilfsmittel.

EP 0 457 138 A2

Die Erfindung betrifft thermoplastische Formmassen, enthaltend

A) 5 bis 94,9 Gew.-% eines Polyesters,

B) 5 bis 94,9 Gew.-% eines Polyphenylenethers,

C) 0,1 bis 50 Gew.-% eines durch anionische Polymerisation erhältlichen Homo- oder Copolymerisates aus Vinylaromaten oder Dienen oder deren Mischungen, welche primäre oder sekundäre Aminogruppen an den Kettenenden tragen,

D) 0 bis 40 Gew.-% eines schlagzähmodifizierenden Kautschuks,

E) 0 bis 60 Gew.-% üblicher Zusatzstoffe und Verarbeitungshilfsmittel.

Außerdem betrifft die Erfindung die Verwendung dieser Formmassen zur Herstellung von Fasern, Folien und Formkörpern sowie die aus den erfindungsgemäßen Formmassen erhältlichen Formkörper.

Polymerblends aus Polyphenylenethern und Polyestern zeichnen sich durch ihre mechanischen Eigenschaften wie geringe Wasseraufnahme und hohe Wärmeformbeständigkeit aus. Da die unterschiedlichen Polymermatrices unverträglich sind, ist die Verarbeitung zu Formkörpern meist problematisch und die geringe Phasenhaftung der Blendkomponenten führt zu einer hohen Sprödigkeit der Formkörper.

Aus der US 3 819 759 sind Formmassen aus Polyestern mit Polyphenylenethern und/oder Polycarbonaten bekannt, deren Verarbeitbarkeit durch Zusätze von Triarylphosphaten verbessert wurde. Die Mischungsverhältnisse sind jedoch nicht beliebig, da bei höheren Mengen an Triarylphosphaten die Verträglichkeit der Mischungen und die mechanischen Eigenschaften der Formkörper sich deutlich verschlechtern.

Diese Nachteile weisen auch Mischungen aus Polytetramethylenterephthalat und Polyphenylenethern auf, die in der JP-A 49/75662 beschrieben sind.

Aus der JP-A 57/200447 ist es bekannt, Blends aus PPE und Polyestern mit einem speziellen Lösungsverfahren herzustellen. Bei der Verarbeitung in der Schmelze, welches beim Konfektionieren auf Extrudern z.B. erforderlich ist, entmischen sich die beiden Polymerkomponenten wieder.

Aus den JP-A 62/129342, JP-A 62/129343, JP-A 62/209165, JP-A 63/066249 und JP-A 01/36644 sind Blends aus Polyestern und Polyphenylenethern bekannt, die als Phasenvermittler Copolymere aus Styrol mit funktionelle Gruppen tragenden Monomeren enthalten. Erwähnt sind carboxyl-, hydroxi-, epoxi-oder aminofunktionelle Monomere.

Die mechanischen Eigenschaften der Formkörper aus diesen Blends sind noch verbesserungswürdig, da diese Pfropfcopolymeren (Kammpolymere) nur eine grobe Phasenmorphologie und demzufolge eine nicht optimale Phasenhaftung der beiden Polymermatrices erlauben. Darüber hinaus reagieren die funktionellen Gruppen der Monomeren nicht immer vollständig ab, so daß sich insbesondere bei aminogruppenhaltigen Copolymerisaten bei der Verarbeitung stark vergilbte Formkörper ergeben.

Der vorliegenden Erfindung lag daher die Aufgabe zugrunde, thermoplastische Formmassen aus Polyphenylenethern und Polyestern zur Verfügung zu stellen, die sich gut verarbeiten lassen und deren Formkörper gute mechanische Eigenschaften insbesondere eine gute Reißdehnung und eine helle Eigenfarbe aufweisen.

Demgemäß wurden die eingangs definierten Formmassen gefunden.

Bevorzugte Formmassen dieser Art und ihre Verwendung sind den Unteransprüchen zu entnehmen.

Als Komponente (A) enthalten die erfindungsgemäßen Formmassen 5 bis 94,9, bevorzugt 10 bis 89,5 und insbesondere 20 bis 78 Gew.% eines thermoplastischen Polyesters.

Allgemein werden Polyester auf der Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester (A) liegt im allgemeinen im Bereich von 1,2 bis 1,8 (gemessen in einer 0,5 gew.%igen Lösung in einem Phenol/o-Dichlorbenzolgemisch (Gew.-Verh. 3:2) bei 25 °C).

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und O bis 95 mol-% Terephthalsäure, insbesondere etwa äquivalente Mischungen dieser beiden Säuren verwendet.

Die aromatischen Dihydroxyverbindungen haben vorzugsweise die allgemeine Formel I

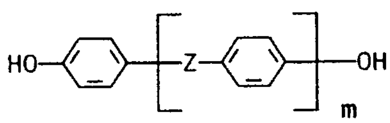

I

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 oder 1 hat. Die Verbindungen I können an den Phenylengruppen auch $C_1$-$C_6$-Alkylgruppen und Fluor, Chlor, oder Brom als Substituenten tragen.

Als Stammkörper dieser Verbindungen seien beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5'-dichlordihydroxyphenyl)propan,
1,1-Di-(4'-hydroxyphenyl)cyclohexan und
2,2-Di-(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.% des Polyalkylenterephthtalates und 2 bis 80 Gew.% des vollarcmatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)-2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt I bis 70 Gewichtsteile, vorzugsweise 2 bis 60 Gewichtsteile, bezogen auf 100 Gewichtsteile Polyester der Komponente (A) der erfindungsgemäßen thermoplastischen Formmassen.

Die in den erfindungsgemäßen Formmassen enthaltenen Polyphenylenether B) sind an sich bekannt. Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis

4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxi-1,4-phenylenether), Poly(2-chlor-1,4-phenylenether), poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,4 bis 0,7 dl/g, gemessen in Choroform bei 30 °C, aufweisen.

Die Komponente B) ist in den erfindungsgemäßen Formmassen in Mengen von 5 bis 94,9, bevorzugt 10 bis 89,5 und insbesondere 20 bis 78 Gew.-% enthalten, bezogen auf das Gesamtgewicht der Komponenten A) bis C) und gegebenenfalls D) und E).

Die Polyphenylenether B) können bis zu 50 Gew.-% bevorzugt bis zu 10 Gew.-% eines vinylaromatischen Polymeren enthalten, welches von der Komponente C) verschieden ist. Beispiele für derartige vinylaromatische Polymere sind Polystyrol, Poly-$\alpha$-methylstyrol oder Poly-p-methylstyrol, von denen Polystyrol bevorzugt ist. Darüber hinaus können auch vinylaromatische Polymere verwendet werden, die in Gegenwart von 2 bis 20 Gew.-% eines kautschukelastischen Polymerisats hergestellt werden. Geeignete kautschukelastische Polymerisate sind beispielsweise Styrol-Butadien-Polymerisate, Polybutadien oder Isopren-Styrol-Polymerisate, wobei im Falle der Verwendung von Dienblöcken diese ganz oder teilweise hydriert sein können.

Als Komponente C) enthalten die erfindungsgemäßen Formmassen eines durch anionische Polymerisation erhältlichen Homo- oder Copolymerisates aus Vinylaromaten oder Dienen oder deren Mischungen, welche primäre oder sekundäre Aminogruppen an den Kettenenden tragen.

Unter Homo-, Co- und Blockcopolymerisaten aus Vinylaromaten und/oder Dienen sind die bekannten Polymerisate dieser Art zu verstehen, die anionisch z.B. mit Hilfe von alkalimetallorganischen Initiatoren aus den entsprechenden Monomeren erhalten werden können. Derartige Verfahren sind bekannt, so daß sich weitere Ausführungen erübrigen (vgl. z.B. GB-Patent 1 444 680 oder Journal of Applied Polymer Science, 22, [1978], Seiten 2007 bis 2913).

Als Vinylaromaten kommen insbesondere Styrol, die verschiedenen Alkylstyrole, welche auch Halogenatome als Substituenten enthalten können, oder Vinylnaphthalin, als Diene Butadien, Isopren, 2,3-Dimethylbutadien, Piperylen, Phenylbutadien oder andere anionisch polymerisierbare konjugierte $C_4$- bis $C_{12}$-Diene in Betracht. Außer den jeweiligen Homopolymerisaten kommen auch die Copolymerisate und die bekannten Blockcopolymerisate von Vinylaromaten und Dienen in Frage, wobei je nach Wahl des Initiators und Lösungsmittels Blockcopolymerisate oder Copolymerisate mit überwiegend statistischer Verteilung der Monomeren erhalten werden können.

Die Polymeren weisen im allgemeinen Durchschnittsmolekulargewichte (Gewichtsmittel $\overline{M}_w$) zwischen 500 und 500 000 auf, bevorzugt 20 000 bis 400 000 und insbesondere 50 000 bis 300 000, ermittelt durch Gelpermeationschromatographie (GPC) und Vergleich mit standardisierten, zur Eichung geeigneten Polymeren (vgl. G. Glöckner, "Polymercharakterisierung durch Flüssigkeitchromatographie", Verlag A. Hüthig, Heidelberg, 1982. Gemessen wird üblicherweise in 0,25 gew.-%iger Tetrahydrofuranlösung bei 23 °C und einer Durchflußgeschwindigkeit von 1,2 ml/min).

Bevorzugtes Homopolymerisat ist Polystyrol und bevorzugte Copolymerisate sind Blockcopolymerisate aus Styrol-Butadien, wobei die Anteile der Blöcke aus Styrol oder Butadien beliebig sind. Besonders bevorzugt sind Blockcopolymerisate, die aus 30 bis 70 Gew.-%, insbesondere 40 bis 60 Gew.-% Polystyrol und 30 bis 70 Gew.-%, insbesondere 40 bis 60 Gew.-% Polybutadien bestehen, da diese, wie es gewünscht ist, nach der Modifizierung mit Aminogruppen eine besonders gute Phasenhaftung der Komponenten A) und B) mit C) gewährleisten.

Die Komponente C) wird entweder aus den lebenden anionisch polymerisierten oder aus mit Alkalimetall metallisierten Homo-, Co- und/oder Blockpolymerisaten aus Vinylaromaten und/oder Dienen nach bekannten Verfahren hergestellt (vgl. die eingangs zitierte Literatur sowie J.M. Malan et al. Chem. Rev. 69 (1969) (5), Seiten 693 bis 755). Hierzu werden die Monomeren in Gegenwart von Alkalimetallen oder deren Alkyl- oder Arylderivaten, insbesondere in Gegenwart der Alkylderivate des Lithiums wie sec.-Butyllithium in einem inerten Lösungsmittel wie aliphatischen oder aromatischen Kohlenwasserstoffen, insbesondere Hexan, Cyclohexan, Benzol oder Toluol bzw. in Gegenwart von Tetrahydrofuran anionisch polymerisiert. Bei diesen Verfahren erhält man Polymerisate, welche an den Endgruppen Metalle gebunden enthalten.

Man kann aber auch Homo-, Co- und/oder Blockcopolymerisat aus Vinylaromaten und/oder Dienen herstellen und nachträglich mit Alkalimetallen oder starken metallorganischen Basen metallieren. Derartig metallierte Polymerisate enthalten die metallorganischen Gruppierungen statistisch längs der Kette verteilt.

Bevorzugt wird von lebenden anionischen Polymerketten ausgegangen, die mit einem Aziridin oder Diaziridin und anschließend mit einer nucleophilen Verbindung umgesetzt werden.

Die Komponente C) enthält im allgemeinen 1 bis 10 der funktionellen Aminogruppen pro Makromolekül im Mittel. Das bedeutet, daß, bezogen auf die Summe aller Makromoleküle, im statistischen Durchschnitt pro Makromolekül 1 bis 10 funktionelle Gruppen vorliegen sollen.

Bevorzugt sind Polymerisate C), die 1 bis 6 und insbesondere 1 bis 4 der funktionellen Aminogruppen enthalten. Durch die bevorzugte Herstellungsweise mittels lebender anionischer Polymerisatketten ist es gewährleistet, daß die primären oder sekundären Aminogruppen an den Kettenenden bzw. Kettenanfängen vorliegen, so daß eine besonders gute Phasenanbindung mit den Komponenten A) und B) resultiert.

Für die Umsetzung der anionischen Polymerketten in Gegenwart eines Lösungsmittels sind Aziridine und Diaziridine der folgenden Formeln (I) bis (III) geeignet:

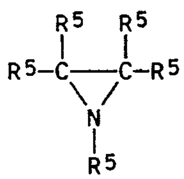

III

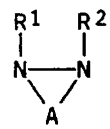

I

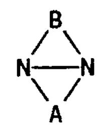

II

wobei die Reste folgende Bedeutung haben:

$R^1$ und $R^2$ ein Alkyl- oder Arylrest,

A eine eingliedrige, gegebenenfalls substituierte Kohlenstoffbrücke,

B eine 2- bis 12gliedrige Brücke, von der mindestens die den Stickstoffatomen sich am nächsten befindlichen Glieder aus

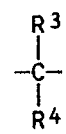

Radikalen bestehen, wobei $R^3$ und $R^4$ gleich oder verschieden sein können und Wasserstoff, Alkyl-, Cycloalkyl- oder Arylreste bedeuten und die entfernteren Glieder außer -C($R^3$,$R^4$)-Radikalen auch Ether- oder N-Alkyl- bzw. Aryliminogruppen sein können,

$R^5$ Wasserstoff, eine Alkyl- oder Arylgruppe mit 1 bis 16 C-Atomen.

Bevorzugte Aziridine der allgemeinen Formel III sind 1,2,2-Trimethylaziridin und 1,2,2-Triethylaziridin.

Bevorzugte Diaziridine der allgemeinen Formel I und II sind beispielsweise

1-Propyldiaziridin

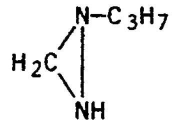

a

1,2-Dibutyldiaziridin

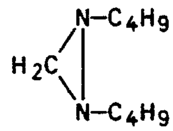

b

1,5-Diaza-bicyclo(3,1,0)hexan

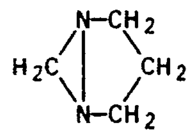

c

6,6-Dimethyl-1,5-diazabicyclo(3,1,0)hexan

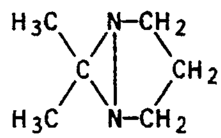

d

1,2-Dimethyl-3-methyl-3-ethyl-diaziridin

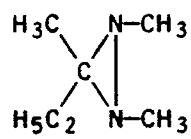

e

1,2-Dimethyl-1,2-diazaspirol(2,3)octan

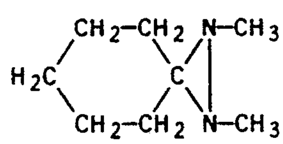

f

1,2-Dibutyl-3-propyl-diaziridin

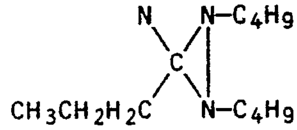

g

3,6-Dimethyl-1,3,5-triaza-bicyclo(3,1,0)hexan

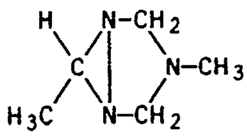

h

6-Methyl-3-oxa-1,5-diaza-bicyclo(3,1,0)hexan

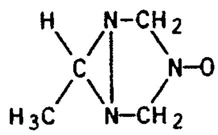

i

6,6-Pentamethylen-1,5-diaza-bicyclo(3,1,0)hexan

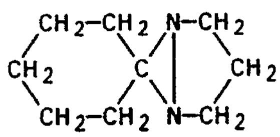

j

Verfahren zur Herstellung von Aziridinen und Diaziridinen sind allgemein bekannt. Für nähere Einzelheiten sei hier auf die EP-A 211 395 und Ichimura et al. Bull. Chem. Soc. Jpn. 40, 432 (1967) verwiesen.

Als Lösungsmittel geeignet sind aliphatische oder aromatische Kohlenwasserstoffe wie Hexan, Cyclohexan, Benzol, Toluol usw. Die Umsetzung erfolgt bevorzugt in Abwesenheit von Wasser und in inerter Atmosphäre z.B. unter Reinstickstoff. Die Umsetzung erfolgt zwischen -70 und 100 °C, vorzugsweise bei Temperaturen zwischen 0 und 60 °C. Bei der Umsetzung mit den metallorganischen Gruppen der Polymerisate erfolgt eine Spaltung der N-N-Bindung, wobei sich der Polymerrest an einen Stickstoff und das Metall, z.B. Lithium, an den anderen Stickstoff anlagert.

Die Umsetzung verläuft mit großer Geschwindigkeit und quantitativ. Es ist von Vorteil, daß man bei ihrer Anwendung keinen oder nur wenig Überschuß benötigt, so daß die umgesetzten Polymeren kaum durch nicht umgesetzte Aziridine verunreinigt werden. Die lebenden Polymerlösungen, die eine intensive Orangerotfärbung aufweisen, wenn das Kettenende aus Styrol oder seinen Substitutionsprodukten besteht, können z.B. mit den Aziridinen auf das Verschwinden der Farbe austitriert werden.

Durch die anschließende Umsetzung mit einer nucleophilen Verbindung wird das Metallkation gegen Wasserstoff ausgetauscht und es entstehen primäre bzw. sekundäre Aminogruppen sowie Metallsalze.

Geeignete nucleophile Verbindungen sind Wasser, Alkohole, wobei Ethanol und Methanol besonders bevorzugt sind sowie konzentrierte Salzsäure oder 80 gew.-%ige Essigsäure sowie Aceton oder Chloroform.

Gleichzeitig fungiert die nucleophile Verbindung meist als Fällungsreagenz. Die Aufarbeitung erfolgt wie üblich.

Die Komponente C) kann auch schlagzäh modifiziert sein, bevorzugt ist C) jedoch nicht - schlagzähmodifiziert. Solche Polymere sind dem Fachmann allgemein als schlagzähes Polystyrol bzw. die entsprechenden Styrolderivate bekannt. Dabei werden die Polymeren in Gegenwart eines schlagzäh modifizierten Kautschuks hergestellt oder mit gepfropften Kautschuken abgemischt. Als kautschukartige Polymere sind z.B. Polybutadien, Styrol-Butadien, Acrylnitril-Butadien, Ethylen-Propylen-Polyacrylat und Polyisopren-Kautschuke zu nennen.

Diese können in ungepfropfter Form auch zur Schlagzähmodifizierung der Komponente B) eingesetzt werden.

In diesem Fall kann zusätzlich zu den Komponenten A), B) und C) ein schlagzäh modifizierender Kautschuk D) zugesetzt werden. Beispielsweise sind hier zu nennen: Polybutadienkautschuke, Acrylatkautschuke, Styrol-Butadien-Kautschuke, Polybuten-Kautschuke, hydrierte Styrol-Butadien-Kautschuke, Acrylnitril-Butadien-Kautschuke, Ethylen-Propylen-Kautschuke, PolyisoprenKautschuke, styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere, wie z.B. AB, ABA, ABA-Tapering und Stern-Blockcopolymere sowie ähnliche Isopren-Blockpolymerisate und hydrierte oder teilweise hydrierte Blockcopolymerisate. Von diesen werden Blockcopolymerisate, die Styrol und Butadien enthalten, bevorzugt.

Besonders bevorzugt werden Kautschuke verwendet, die üblicherweise für die Schlagzähmodifizierung von Polyestern eingesetzt werden.

Hier seien insbesondere Pfropfcopolymerisate aus

$D_1$) 60 bis 99 Gew.-% einer elastomeren Komponente, aufgebaut aus Acrylsäureestern, Methacrylsäureestern und/oder konjugierten Dienen, sowie gewünschtenfalls weiteren Comonomeren, als Pfropfgrundlage und

$D_2$) 1 bis 40, vorzugsweise 2 bis 10 Gew.-% eines Epoxidgruppen-enthaltenden Monomeren als Pfropfauflage genannt.

Die elastomere Komponente (Kautschukkomponente $D_1$) weist im allgemeinen eine Glasübergangstemperatur von unter 0°C, vorzugsweise von unter -20°C auf. Bevorzugt werden als Kautschukkomponenten Homopolymerisate aus Alkylacrylaten und/oder Alkylmethacrylaten mit 1 bis 8 C-Atomen im Alkylrest und/oder Homo- und/oder Copolymerisate konjugierter Diene, z.B. 1,3-Butadien und Isopren verwendet. Als besonders bevorzugtes Beispiel sei eine Kautschukkomponente (Elastomer) aufgebaut aus Polybutadien und/oder Poly-n-butylacrylat genannt.

Falls gewünscht, können bei der Herstellung der elastomeren Komponente noch weitere Comonomere, vorzugsweise vinylaromatische Monomere mit bis zu 12 C-Atomen, wie z.B. Styrol oder Mischungen aus Styrol und Acrylnitril eingesetzt werden.

Als Komponente $D_2$) eignen sich prinzipiell alle Epoxidgruppen-enthaltenden Monomere, die auf die Pfropfgrundlage $D_1$) aufgepfropft werden können.

Nur stellvertretend für die Vielzahl der geeigneten, Epoxidgruppen-enthaltenden Monomeren seien hier Glycidylderivate, insbesondere Glycidylacrylsäureester und/oder Glycidylmethacrylsäureester genannt, die wegen ihrer leichten Verfügbarkeit bevorzugt werden.

Verfahren zur Herstellung solcher Pfropfcopolymerisate sind an sich bekannt.

Der Anteil des schlagzäh modifizierenden Kautschuks D) ist nicht kritisch. Im allgemeinen beträgt er jedoch nicht mehr als 40 Gew.-%, bezogen auf die Gesamtmasse der Komponenten A) bis E), bevorzugt 0 bis 30 Gew.-% und insbesondere 4 bis 20 Gew.-%.

Als weitere Komponente E) können die erfindungsgemäßen thermoplastischen Formmassen übliche Zusatzstoffe und Verarbeitungsmittel in wirksamen Mengen enthalten. Deren Anteil beträgt vorzugsweise bis zu 50, besonders bevorzugt bis zu 20 Gew.-%. Nur beispielsweise seien hier genannt Hitze-und Lichtstabilisatoren, Gleit- und Entformungsmittel. Färbemittel, wie z.B. Farbstoffe und Pigmente, Verstärkungsmittel wie Glasfasern, Asbestfasern, Kohlenstoff-Fasern, aromatische Polyamidfasern und/oder Füllstoffe, Gipsfasern, synthetische Kalziumsilikate, Kaolin, kalziniertes Kaolin, Wollastonit, Talkum, Kreide, ferner auch Flammschutzmittel wie anorganische und organische Phosphorverbindungen z.B. Phosphate, Phosphorsäureester, Phosphorigsäureester, Phosphinsäureester, Phosphonigsäureester und organische Phosphinoxide. Darüber hinaus können auch weitere niedermolekulare oder hochmolekulare Polymere als Zusatzstoffe in den erfindungsgemäßen Formmassen enthalten sein.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper mit guten mechanischen Eigenschaften herstellen, die insbesondere eine verbesserte Reißdehnung und helle Eigenfarbe aufweisen.

Darüber hinaus lassen sich die erfindungsgemäßen Formmassen problemlos verarbeiten, da die Polymermatrices kaum mehr zur Entmischung neigen.

Beispiele

Komponente A)

Polybutylenterephthalat mit einer relativen Viskosität $\eta_{rel}$:1,60 (gemessen in einer 0,5 gew.-%igen Lösung in einem Phenol/o-Dichlorbenzolgemisch (Gewichtsverhältnis 3 : 2) bei 25° C).

Komponente B)

90 Gew.-% Poly-(2,6-dimethyl-1,4-phenylenether) mit einer relativen Viskosität $\eta_{rel}$ von 0,56 (gemessen in 1 gew.-%iger Lösung in $CHCl_3$ bei 30° C) und
10 Gew.-% Polystyrol (Schmelzflußindex MFI bei 200° C und 5 kg Belastung = 2 kg/10 min) wurden in einem Zweischneckenextruder bei 270° C aufgeschmolzen, bei 280° C homogenisiert und anschließend in einer Entgasungszone bei 300° C unter Vakuum entgast. Die mittlere Verweilzeit im Extruder betrug 1,5 min.

Komponente C1)

In einem thermostatisierten Rührkessel wurden unter Reinstickstoff 7000 ml gereinigtes wasserfreies Cyclohexan und 4,4 ml einer 1,4 molaren Lösung von sek.-Butyllithium in Heptan (6,22 mmol) als Initiator vorgelegt.
Innerhalb von 10 bis 15 Min. wurden 1320 ml (1200 g) Styrol bei 55-70° C zudosiert. Nach weiteren 30 Min. bei 70° C war die Polymerisation vollständig.
Dem Reaktionsgefäß wurde zur Molekulargewichtsbestimmung eine Probemenge entnommen.
Anschließend wurden bei 40° C 0,626 ml (7,46 mmol) 1-Propyl-diaziridin zugegeben und die Reaktionslösung für 1 h bei 40° C belassen. Nach 8 bis 10 h bei 40° C wurde die Reaktionslösung im Verhältnis 1:1 mit Cyclohexan verdünnt und anschließend mit der ca. 5-fachen Menge an Ethanol (ca. 60 l) ausgefällt. Das ausgefällte Polymere wurde filtriert und bei 70° C im Vakuum getrocknet. Das aminoterminierte Polystyrol wies ein mittleres Molekulargewicht ($\overline{M}_w$, Gewichtsmittel) von 220 000 auf.

| | |
|---|---|
| N-Gehalt theor.: | 0,015 % |
| gef.: | 0,014 % |

Der Stickstoffgehalt wurde nach Kjeldahl bestimmt.

Komponente C2)

Die Herstellung erfolgte analog der Arbeitsweise zur Herstellung von Komponente C1).
Einsatzmengen waren:
6000 ml Cyclohexan
2383 ml (≙ 2166 g) Styrol
17,1 ml (24,1 mmol) einer 1,4 molaren Lösung von sek.- Butyllithium in Heptan
2,4 ml (28,9 mmol) 1-Propyldiaziridin
ca. 8 1 Cyclohexan
60 1 Ethanol.
Das aminoterminierte Polystyrol wies ein $\overline{M}_w$ von 95 000 auf.

| | |
|---|---|
| N-Gehalt theor.: | 0,031 % |
| gef.: | 0,037 % |

Komponente C3)

Ein Styrol-Butadien-Zweiblockcopolymer (Gewichtsverhältnis 4:6) mit einem $\overline{M}_w$ von 243 000 wurde hergestellt. Dazu wurden in einem thermostatisierten Rührkessel 7000 ml Methylcyclohexan und 407 g (508 ml) Styrol vorgelegt. Bei 50° C erfolgte die Zugabe von 3,4 ml einer 1,4 molaren Lösung sek-Butyllithium (≙ 4,8 mmol) in Hexan. Nach 1 h bei 65° C war die Bildung der Polystyrollithiumblockes vollständig.
Anschließend wurde in den Rührkessel gereinigtes monomeres 1,3-Butadien zudosiert (826 ml ≙ 537 g) und bei Temperaturen zwischen 60 und 65° C bis zur vollständigen Umsetzung unter Bildung von Ketten aus 2 Segmenten Polystyrol-Polybutadienyllithium polymerisiert. Die Polymerisation war nach 1 h vollständig. Danach wurden bei 40° C 0,403 ml (4,8 mmol) 1-Propyldiaziridin zugegeben. Nach 8 bis 10 h wurde die Lösung des aminoterminierten Blockcopolymeren mit Methylcyclohexan im Verhältnis 1:1 verdünnt und

anschließend in ca. 60 l Ethanol ausgefällt und bei 70° C im Vakuum getrocknet.

N-Gehalt theor.: 0,018 %

gef.: 0,016 %.

Komponenten C1* bis C11*)

Die Vergleichskomponenten wurden durch radikalische Emulsionspolymerisation mit tert.-Dodecylmercaptan als Regler und Kaliumperoxodisulfat als Initiator bei erhöhter Temperatur hergestellt.

Die Zusammensetzungen sind der Tabelle 1 zu entnehmen.

Tabelle 1

| Komponente | Anteile Styrol [Gew.-%] | Anteil Comonomeres [Gew.-%] | K-Wert nach Fikentscher b) |
|---|---|---|---|
| C1* | 99 | 1 Glycidylmethacrylat | 46 |
| C2* | 97 | 3 " | 45 |
| C3* | 95 | 5 " | 45 |
| C4* | 93 | 7 " | 46 |
| C5* | 97 | 3 Maleinsäureanhydrid a) | |
| C6* | 95,2 | 5,8 " | |
| C7* | 86 | 14 " | |
| C8* | 99,5 | 0,5 Methacrylamid | 41 |
| C9* | 99 | 1 " | 41 |
| C10* | 95 | 5 " | 40 |
| C11* | 90 | 10 " | 42 |

a) Dylark ® 132 bzw. 232, 332 der Fa. Shell AG

b) K-Wert Bestimmung erfolgte in 0,5 gew.-%iger Lösung in $CHCl_3$ bei 25°C

Komponente D1)

Ein Emulsionspfropfkautschuk wurde auf folgende Weise hergestellt:

in 589,59 g Wasser unter Verwendung von 2,78 g einer $C_{12}$-$C_{18}$-Paraffinsulfonsäure als Emulgator und 1,64

g Kaliumpersulfat als Katalysator und 0,95 g Natriumbicarbonat als pH-Regulator wurden bei 62 °C 286,68 g n-Butylacrylat und 5,85 g Dihydroxydicyclopentadienacrylat polymerisiert. Nach 6,5 h wurden 89,56 g Styrol und 38,38 g Acrylnitril zu dem Reaktionsgemisch in 3,5 h zugegeben und dann weitere 1,5 h bei einer Temperatur von 62 °C polymerisiert.

Die Dispersion hatte einen $d_{50}$-Wert der Massenverteilung von 0,35 µm.

Komponente D2)

Ein Styrol-Butadien-Vierblockcopolymer mit 45 Gew.-% Polystyrol mit einem mittleren Molekulargewicht des gesamten Blockcopolymeren von 70 000.

Herstellung der Formmassen

Die Komponenten A) bis D) wurden auf einem Zweischneckenextruder bei 280 °C aufgeschmolzen und homogenisiert. Der Schmelzstrang wurde durch ein Wasserbad geführt und granuliert.

Das getrocknete Granulat wurde bei 280 °C zu Normkleinstäben gespritzt.

Die Reißdehnung wurde nach DIN 53455 bestimmt.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser abgelesen werden. Die angegebenen mittleren Durchmesser stellen dabei einen Mittelwert von mindestens 5000 Teilchen dar.

Die Beurteilung der Eigenfarbe erfolgte visuell durch Einteilung in die Kategorien 1 bis 6, wobei 1 der hellsten Eigenfarbe entsprach.

Die Zusammensetzung der Formmassen und die Ergebnisse der Messungen sind der Tabelle 2 zu entnehmen.

Tabelle 2

| Nr. | Zusammensetzung [Gew.-%] | | | | Reißdehnung [%] | Farbe | $d_{50}$Wert [µm] |
|---|---|---|---|---|---|---|---|
| 1* | 80 A) | 20 B) | - | | 1 | 1 | 10 |
| 2 | 64 A) | 16 B) | 20 C1) | | 4 | 1 | 4 |
| 3 | 64 A) | 16 B) | 20 C2) | | 5 | 1 | 2 |
| 4* | 20 A) | 80 B) | - | | 1 | 1 | 5 |
| 5 | 18 A) | 72 B) | 10 C2) | | 3 | 1 | 3 |
| 6 | 16 A) | 64 B) | 20 C2) | | 5 | 1 | 2 |
| 7 | 14 A) | 56 B) | 30 C2) | | 6 | 1 | 0,5 |
| 8* | 64 A) | 18 B) | - | 16 D1) + 2 D2) | 3 | 1 | 10 |
| 9 | 51,2 A) | 14,4 B) | 20 C1) | 12,8 D1) + 1,6 D2) | 18 | 1 | 4 |
| 10 | 51,2 A) | 14,4 B) | 20 C2) | 12,8 D1) + 1,6 D2) | 22 | 1 | 2 |
| 11* | 16 A) | 72 B) | - | 4 D1) + 8 D2) | 3 | 1 | 5 |
| 12 | 14,4 A) | 64,8 B) | 10 C2) | 3,6 D1) + 7,2 D2) | 15 | 1 | 3 |
| 13 | 12,8 A) | 57,6 B) | 20 C2) | 3,2 D1) + 6,4 D2) | 23 | 1 | 2 |
| 14 | 11,2 A) | 50,4 B) | 30 C2) | 2,8 D1) + 5,6 D2) | 25 | 1 | 0,5 |
| 15 | 48 A) | 36 B) | 30 C2) | 12 D1) + 4 D2) | 24 | 1 | 0,6 |
| 16 | 11,2 A) | 50,4 B) | 30 C3) | 2,8 D1) + 5,6 D2) | 27 | 1-2 | 0,5 |
| 17* | 36 B) | 48 A) | - | 12 D1) 4 D2) | 3 | 1 | 10 |
| 18* | 36 B) | 48 A) | 5 C1*) | 12 D1) 4 D2) | 5 | 1 | 10 |
| 19* | 36 B) | 48 A) | 10 C1*) | 12 D1) 4 D2) | 8 | 1 | 9 |
| 20* | 36 B) | 48 A) | 15 C1*) | 12 D1) 4 D2) | 10 | 1-2 | 8 |
| 21* | 36 B) | 48 A) | 5 C2*) | 12 D1) 4 D2) | 9 | 1 | 9 |

Tabelle 2 (Fortsetzung)

| Nr. | Zusammensetzung [Gew.-%] | | | | | Reißdehnung [%] | Farbe | $d_{50}$Wert [$\mu m$] |
|---|---|---|---|---|---|---|---|---|
| 22* | 36 B) | 48 A) | 10 C2*) | 12 D1) | 4 D2) | 10 | 1 | 8 |
| 23* | 36 B) | 48 A) | 15 C2*) | 12 D1) | 4 D2) | 11 | 1-2 | 7 |
| 24* | 36 B) | 48 A) | 5 C3*) | 12 D1) | 4 D2) | 10 | 1 | 7 |
| 25* | 36 B) | 48 A) | 10 C3*) | 12 D1) | 4 D2) | 12 | 1 | 6 |
| 26* | 36 B) | 48 A) | 15 C3*) | 12 D1) | 4 D2) | 13 | 1-2 | 5 |
| 27* | 36 B) | 48 A) | 5 C4*) | 12 D1) | 4 D2) | 11 | 1 | 6 |
| 28* | 36 B) | 48 A) | 10 C4*) | 12 D1) | 4 D2) | 13 | 1 | 5 |
| 29* | 36 B) | 48 A) | 15 C4*) | 12 D1) | 4 D2) | 14 | 1-2 | 4 |
| 30* | 36 B) | 48 A) | 10 C5*) | 12 D1) | 4 D2) | 9 | 1-2 | 10 |
| 31* | 36 B) | 48 A) | 10 C6*) | 12 D1) | 4 D2) | 10 | 2 | 10 |
| 32* | 36 B) | 48 A) | 10 C7*) | 12 D1) | 4 D2) | 10 | 2 | 10 |
| 33* | 36 B) | 48 A) | 10 C8*) | 12 D1) | 4 D2) | 10 | 3-4 | 10 |
| 34* | 36 B) | 48 A) | 10 C9*) | 12 D1) | 4 D2) | 11 | 3-4 | 10 |
| 35* | 36 B) | 48 A) | 10 C10*) | 12 D1) | 4 D2) | 11 | 4 | 10 |
| 36* | 36 B) | 48 A) | 10 C11*) | 12 D1) | 4 D2) | 14 | 4 | 10 |

*) zum Vergleich

## Patentansprüche

**1.** Thermoplastische Formmassen, enthaltend
A) 5 bis 94,9 Gew.-% eines Polyesters,

B) 5 bis 94,9 Gew.-% eines Polyphenylenethers,

C) 0,1 bis 50 Gew.-% eines durch anionische Polymerisation erhältlichen Homo- oder Copolymerisates aus Vinylaromaten oder Dienen oder deren Mischungen, welche primäre oder sekundäre Aminogruppen an den Kettenenden tragen,

D) 0 bis 40 Gew.-% eines schlagzähmodifizierenden Kautschuks,

E) 0 bis 60 Gew.-% üblicher Zusatzstoffe und Verarbeitungshilfsmittel.

**2.** Thermoplastische Formmassen nach Anspruch 1, in denen die Komponente C) pro Makromolekül im Mittel 1 bis 10 der funktionellen Aminogruppen enthält.

**3.** Thermoplastische Formmassen nach den Ansprüchen 1 und 2, in denen die Komponente C) durch anionische Polymerisation von vinylaromatischen oder Dienmonomeren oder deren Mischungen erhältlich ist, wobei die lebenden anionischen Polymerketten mit einem Aziridin oder Diaziridin und anschließend mit einer nucleophilen Verbindung umgesetzt wurden.

**4.** Thermoplastische Formmassen nach den Ansprüchen 1 bis 3, in denen die Komponente C) ein Molekulargewicht (Gewichtsmittel) von 500 bis 500 000 aufweist.

**5.** Thermoplastische Formmassen nach den Ansprüchen 1 bis 4, in denen die Komponente B) 0 bis 50 Gew.-% eines von C) verschiedenen vinylaromatischen Polymeren enthält.

**6.** Thermoplastische Formmassen nach den Ansprüchen 1 bis 5 enthaltend

10 bis 89,5 Gew.-% Komponente A)
10 bis 89,5 Gew.-% Komponente B)
0,5 bis 30 Gew.-% Komponente C).

**7.** Verwendung der thermoplastischen Formmassen gemäß den Ansprüchen 1 bis 6 zur Herstellung von Fasern, Folien und Formkörpern.

**8.** Formkörper, erhältlich aus den thermoplastischen Formmassen gemäß den Ansprüchen 1 bis 6.